# EUROPEAN PATENT APPLICATION

(11) **EP 2 177 103 A1**
(43) Date of publication of application: **21.04.2010**
(21) Application number: 09172826.1
(22) Date of filing: 13.10.2009
(51) Int. Cl.: A01G 9/16

(54) **Mobile greenhouse**

(30) Priority: 15.10.2008 EP 08166628
(71) Applicant: Swilion Business Development BV, 2140 AA Vijfhuizen (NL)
(72) Inventor: Oosterling, Pieter Adriaan, 4508 KC WATERLANDKERKJE (NL)
(74) Representative: Uittenbogaart, Gustaaf Adolf

(57) **Abstract**

The invention concerns a mobile greenhouse comprising a cultivation area (1) that has a bottom tray (20) with a seedbed (19) with seeds.

In accordance with the invention the mobile greenhouse includes equipment comprising at least two of the list of a equipment: a water supply system for wetting the seedbed (19), a nutrient supply system for administering nutrients (12) to the seedbed (19), a ventilation system (6) for circulating air through the cultivation area (1), a shutter (2) system for controlling outside radiation into the cultivation area (1), a light system (5) for illuminating the seedbed (19) and a heating system (9) for the seedbed (19) and/or the cultivation area (1). Further, the mobile greenhouse includes a control system (7) that controls the equipment, the control system having input means (3) to set the control system (7) so that it controls the equipment in accordance with the requirements of the type of the seeds in the seedbed (19).

## Description

The invention concerns a mobile greenhouse in accordance with the preamble of claim 1. The disadvantage of the known mobile greenhouse is that the user has to provide the conditions that are suitable for germination of the seeds and later for the growth of the plants and the results will be better if the conditions are geared to the needs of the specific seeds and plants. The conditions concern the air circulation, water supply, nutrient supply, incoming radiation, artificial light, and/or temperature in the cultivation area. For the various seeds and plants, different conditions are required and a less experienced user has difficulty to get this right specially if there are more mobile greenhouses.

In order to overcome this disadvantage the mobile greenhouse is according to claim 1. By having a greenhouse with some equipment to provide the conditions and a control system that controls equipment and that can receive instructions in accordance with the specific seeds also inexperienced users can cultivate the seeds according to the requirements of their specific properties. The equipment can take care of providing two conditions, but moe extensive embodiments may provide three up to all earlier mentioned conditions.

In accordance with an embodiment, the mobile greenhouse is according to claim 2. In this way, it is easy to instruct the control system so that it can choose the proper program that belongs to the specific seeds.

In accordance with an embodiment, the mobile greenhouse is according to claim 3. In this way, the control system can be instructed in a way that avoids errors as the specific card can be part of the package containing the seedbed.

In accordance with an embodiment, the mobile greenhouse is according to claim 4. In this way, the control system can be instructed in a way that avoids errors as the specific card can be part of the package containing the seedbed and there is no need to pre-program the control system with all varieties of seeds as all specific information for that seed type are stored on the card.

In accordance with an embodiment, the mobile greenhouse is according to claim 5. In this way, the seeds get always the right amount of water and there is no need for the user to take care of the daily requirements.

In accordance with an embodiment, the mobile greenhouse is according to claim 6. In this way, the growing plants receive the nutrients they require.

In accordance with an embodiment, the mobile greenhouse is according to claim 7. In this way the location of the mobile greenhouse is not important, it can be located inside or outside, in a cold climate, in a kitchen near the user or in sunlight; in all situations the control system will adapt the settings in the greenhouse to the requirements of the seeds or plants.

In accordance with an embodiment, the mobile greenhouse is according to claim 8. By filtering the inlet air and creating a slight overpressure the cultivation area is kept free from vermin or pathogenic organisms, this prevents diseases or damage by insects.

In accordance with an embodiment, the mobile greenhouse is according to claim 9. Changing the speed of the ventilator and/or the settings of the heater varies the temperature difference between the cultivation area and the ambient air so that the temperature in the cultivation area can be optimized for the cultivation of the plants.

Hereafter the invention is explained with the aid one or more embodiments of the invention as shown in a drawing. In the drawing
Figure 1 shows in a diagram various components of a mobile greenhouse,
Figure 2 shows a perspective view of a mobile greenhouse, and
Figure 3 shows the view of figure 2 wherein some covers are removed.

In the various embodiments, components that have the same function are indicated with the same reference number.

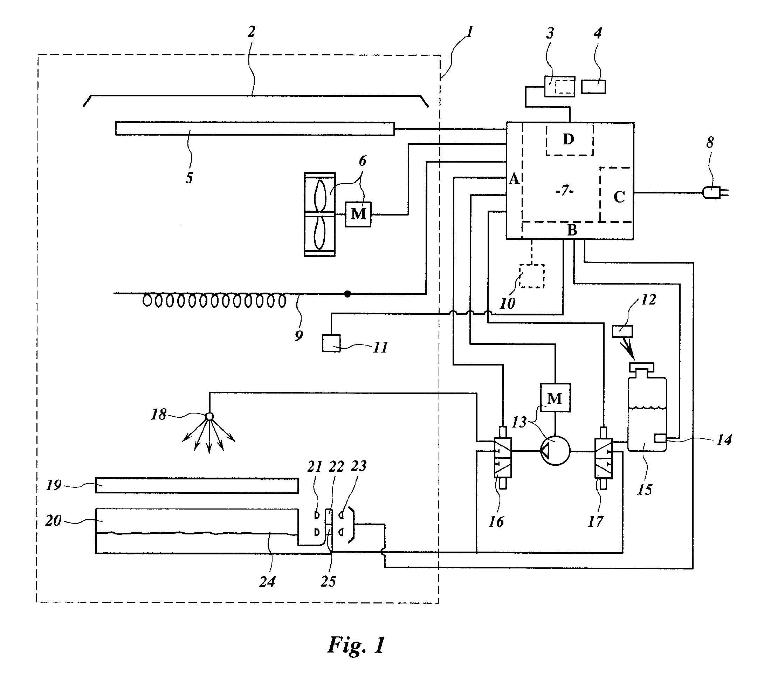

Figure 1 shows the various components of a mobile greenhouse. The mobile greenhouse has a cultivation area 1 for cultivation of plants, the cultivation area 1 is indicated in the diagram with an interrupted line. The cultivation area 1 is a closed space with a more or less uninterrupted air flow from outside the cultivation area 1 and preferably an overpressure in the cultivation area 1 to prevent vermin and pathogenic organisms to enter through gaps in the enclosure of the cultivation area 1 or other openings. A ventilator 6 generates the airflow into the cultivation area 1, a filter (not shown) removes particles from the incoming air and a ventilation grille (not shown) with small openings makes outflow of the air possible and simultaneously causes the slight overpressure in the cultivation area 1. In a further embodiment, the airflow generated by the ventilator 6 is variable in order to regulate the temperature difference between the ambient air and the cultivation area 1. In order to monitor the temperature in the cultivation area 1 there is a temperature sensor 11 in the cultivation area 1.

The cultivation area 1 can have transparent cover (not shown) so that radiation from the sun may heat the cultivation area 1. In order to prevent overheating there is a sun shield 2 to stop entrance of radiation into the cultivation area 1. In a further embodiment, a radiation sensor 10 detects the radiation from the sun and its intensity. The sun shield 2 may leave the sides of the transparent cover open so that from the side of the cultivation area 1 the seeds and plants are visible and their growth can be followed. In a further embodiment, the sun shield 2 is adjustable so that the quantity of radiation let into the cultivation area 1 can be adjusted to the requirements of the seeds and plants.

For stimulating growth, the cultivation area 1 includes lamps 5 that have a radiation spectrum that is suitable for plants. For situations, that the ambient air is too cold for proper growth of the plants in the cultivation area 1 there is a heater 9. The heater 9 can be located at the underside of the cultivation area 1 in a bottom tray 20. Other locations are possible such as in the airflow from the ventilator 6.

The bottom tray 20 forms the underside of the cultivation area 1. The bottom tray 20 is a transportable watertight tray that a user will position at an accessible location. In this location, it must be possible that the air circulates freely around the cultivation area 1. The cover on the bottom tray 20 can be removed by the user in an easy way so that the user can access the cultivation area 1 for taking out plant parts and he can use these when preparing food. In order to improve the handling of the cover the cultivation area 1 has limited dimensions, for instance the largest length is 1,5 meter or less and preferably the length is 1,2 meter or less and the width is 0,8 meter or less. A cultivation area for herbs that are used in a kitchen for flavouring food can have a length of 0,6 meter and a width of 0,3 meter.

The bottom tray 20 contains water with a water level 24 that is detected in a gauge glass 22 with a float 25. Lamps 21 illuminate the float 25, level sensors 23 detect the position of the float 25, and therewith the height of the water level 24. A support (not shown) in the bottom tray 20 supports a seedbed 19 in which the plants grow. The water in the bottom tray 20 moistens the seedbed 19 and the roots of the plants, if necessary the water level 24 can be changed intermittently so that seedbed 19 and the plant roots can have changing access to water. In the cultivation area 1 are one or more spray heads 18 for spraying the plants.

The seedbed 19 can be made of fibre and have a thickness of 2 - 5 centimetres. In the seedbed 19 seeds are embedded at locations that are suitable for proper plant growth. The seedbed 19 can cover the complete surface of the bottom tray 20; in other embodiments, a bottom tray 20 has space for two or more seedbeds 19. The seedbed 19 can be a piece of coconut matting; other fibres such as glass fibre are suitable as well. Prior to use the seedbed 19 with embedded seeds is dry and can be rolled to a cylindrical package so that it is easy to transport.

The mobile greenhouse includes a water tank 15 for supplying water via a second valve 17 to a pump 13. The pump 13 pumps the water via a first valve 16 to either the spray head(s) 18 or the bottom tray 20. The pump 13 can suck the water either from the water tank 15 or from the bottom tray 20 by switching the second valve 17. The water tank 15 has a level sensor 14 for detecting the water level in the water tank 15 for detecting whether the water tank 15 is empty and/or needs to be filled. If it is empty, a signal lamp or similar (not shown) will warn the user. The water tank 15 can be filled with clean water, also nutrients 12 might be added to the water when starting or during the growth.

In a further embodiment, the water supply system can have a more simple design. In this embodiment (not shown), the water tank 15 might have a level sensor 14 in the water tank 15 in order to warn that the water tank 15 must be filled. The water tank 15 is connected directly with the bottom tray 20 via a valve with a float. If the water level in the bottom tray 20 gets too low, the valve with the float opens until the water level in the bottom tray 20 is at the desired level. The pump 13 connects on the suction side with the water tank 15 or the bottom tray 20 and on the pressure side with the spray heads 18. If the blades of the plants must be wetted the pump 13 is switched on. If the water level in the bottom tray 20 must be adapted, this has to be done by hand by changing the setting of the valve with the float and generally will be done only when starting with a new cultivation by placing a new seedbed 19. In a further embodiment, there is no water tank but a direct water supply from water mains.

In the shown embodiments, the water supply system can include nutrients in the water tank 15. In another embodiment, there can be a separate nutrient supply system. In the nutrient supply system (not shown) there is a container with nutrients, either as fluid or as powder, and a dosing system that doses the nutrient in the water in the bottom tray 20 or in the water tank 15.

A control system 7 controls the various components of the mobile greenhouse. The control system 7 includes a power supply and is provided with a power connection 8. In domestic situations, this can be a connection to the power grid; other power sources might be used such as solar power and wind power coupled with a power accumulator for maintaining the control system 7 functioning and other available power sources. The control system 7 is subdivided in a control section A that controls the pump 13, the first valve 16, the second valve 17, the ventilator 6, the heater 9, and the lamps 5. In a sensor section B the various values of the sensors are registered, if necessary in dependence of time. A power supply section C arranges the availability of power for the various parts of the mobile greenhouse and its control system 7.

A program section D monitors and controls the mobile greenhouse. In order to adapt the control system 7 to various seeds and plants that are to be cultivated in the cultivation area 1 the control system 7 has an input device, in this embodiment a card reader 3 that can read a code on a program card 4. The code on the program card 4 is known in the program section D of the control system 7 and based on the code a growth program is determined and the components in the mobile greenhouse are controlled accordingly. The code for the growth program can be communicated to the control system 7 in other way, for instance by punching in the code number with the aid of a keyboard or by reading a bar code.

In another embodiment, the program card 4 contains all settings for the growth program and so is more accurately adapted to the plants or seeds in the seedbed 19. In this embodiment, the user of the mobile greenhouse might have various program cards 4 for various crops. In addition, the supplier of the seedbeds 19 might supply a program card 4 with the seedbed 19 with specific program instructions for the growth of the seeds in the seedbed 19.

A user of the mobile greenhouse installs the mobile greenhouse in a location with fresh air, where the progress of plant growth can be monitored, and where electric power is available. The power connection 8 is connected to a power source, the water tank 15 is filled with water, and if necessary nutrients 12 are added to the water. The seedbed 19 is positioned in the bottom tray 20 and the cultivation area 1 is closed with a cover. After these and other preliminary activities are finished the control system 7 is switched on and the program card 4 is put in the card reader 3.

After this the control system 7 will fully automatic take over all necessary tasks for obtaining the plant growth. The seedbed 19 will be wetted and the germination of the seeds embedded in the seedbed 19 can start. Preferably, the seeds are coated with coats that cause different durations in the start of germination so that plants will be ready for consumption at different moments. In dependence of the plant type the temperature in the cultivation area 1 will be raised by activating the heater 9, the temperature sensor 11 will monitor the temperature, if necessary the settings of the sun shield 2 are adjusted. After germination or even from the start of the growth process the lamps 5 will illuminate the seedbed 19 eight or more hours per day. The ventilator 6 will blow air into the cultivation area 1 and when the temperature in the cultivation area 1 gets too high, the rotation speed of the ventilator 6 increases. At the increased airflow, the temperature inside the cultivation area 1 will get equal to the ambient temperature. In circumstances, the temperature might even get lower due to evaporation of water in the bottom tray 20 or on the plants. Only when the spray heads 18 spray water in order to wet the leaves of the plants or to wet the seedbed 19 the ventilator 6 is switched off.

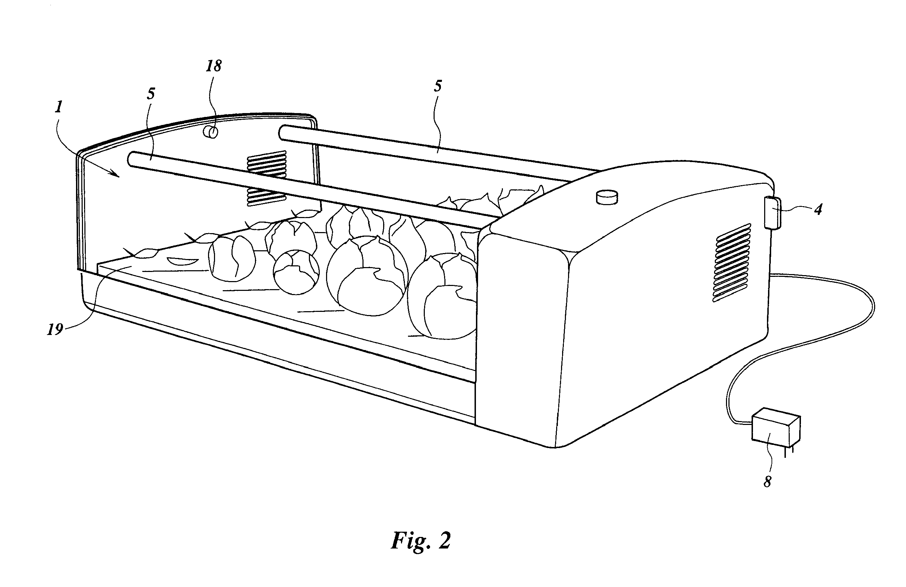

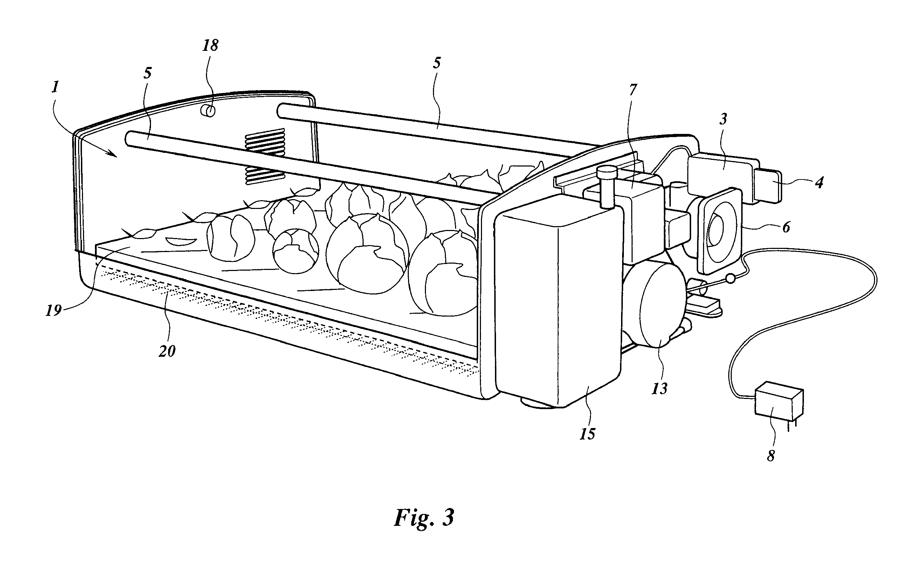

The mobile greenhouse as shown in figure 2 has a seedbed 19 on which various plants of the same type and different ages are growing. For clarity, the cover of the cultivation area 1 is removed so that the lamps 5 and one of the spray heads 18 are visible. As can be seen in figure 3, which shows the same embodiment as shown in figure 2 but with the cover of the various equipment removed, the equipment such as the pump 13, the ventilator 7, the water tank 15 and the control system 7 with card reader 3 and program card 4 are located at the side of the cultivation area 1. At the underside of the cultivation area 1, the seedbed 19 is spread over a grid that is positioned in the bottom tray 20.

## Claims

1. Mobile greenhouse comprising a cultivation area (1) that has a bottom tray (20) with a seedbed with seeds (19) **characterized in that** the mobile greenhouse includes equipment comprising at least two of the list of a water supply system for wetting the seedbed, a nutrient supply system for administering nutrients to the seedbed, a ventilation system (6) for circulating air through the cultivation area, a shutter system (2) for controlling outside radiation into the cultivation area, a light system (5) for illuminating the seedbed and a heating system (9) for the seedbed and/or the cultivation area, and the mobile greenhouse includes a control system (7) that controls the equipment, the control system having input means (3) to set the control system so that it controls the equipment in accordance with the requirements of the type of the seeds in the seedbed (19) .

2. Mobile greenhouse in accordance with claim 1 wherein the control system (7) comprises a memory with stored settings accessible with a code for growing specific types of seed, wherein the input means provides the code.

3. Mobile greenhouse in accordance with claim 1 or 2 wherein the input means comprises a card reader (3) .

4. Mobile greenhouse in accordance with claim 1 or 2 wherein the input means comprises a card reader (3) suitable for receiving cards (4) on which program instructions or parameters for a growth program are stored.

5. Mobile greenhouse in accordance with one of the previous claims wherein the control system (7) controls the supply of water to the seedbed (19).

6. Mobile greenhouse in accordance with one of the previous claims wherein the control system (7) controls the nutrient supply system.

7. Mobile greenhouse in accordance with one of the previous claims wherein the control system (7) controls the lamps (5) and/or the heater (9) in the cultivation area (1) and/or the shutter system.

8. Mobile greenhouse in accordance with one of the previous claims wherein the cultivation area (1) is closable and has an air inlet with a filter and a ventilator (6) and an air outlet with a restricted outflow for creating an overpressure in the cultivation area.

9. Mobile greenhouse in accordance with claim 7 wherein a temperature sensor (11) measures the temperature in the cultivation area (1) and the control system (7) is suitable to process the measured temperature and to control the speed of ventilator (6) and/or the settings of the heater (9) .
